# EUROPEAN PATENT SPECIFICATION

(11) **EP 4 606 218 B1**
(45) Date of publication and mention of the grant of the patent: **09.12.2026**
(21) Application number: 24198511.8
(22) Date of filing: 04.09.2024
(51) Int. Cl.: A01M 9/00, A01C 15/00

(54) **BIOLOGICAL CONTROL AGENT APPLICATION DEVICE**
VORRICHTUNG ZUR VERTEILUNG EINES BIOLOGISCHEN BEKÄMPFUNGSMITTELS
DISPOSITIF D'APPLICATION D'AGENT DE LUTTE BIOLOGIQUE

(30) Priority: 21.02.2024 GB 202402468; 03.04.2024 GB 202404755
(43) Date of publication of application: 27.08.2025
(60) Divisional application: 25194719.8 / 4 640 029
(73) Proprietor: S&A Group Holdings Limited, Hereford HR1 3ET (GB)
(72) Inventor: PALMER, Edward John Francis, Abbey Dore, HR2 0AE (GB); OWENS, Austin William, Leominster, HR6 9HP (GB)
(74) Representative: Haseltine Lake Kempner LLP

(56) References cited:
- EP-B1- 3 965 567
- WO-A1-2021/130079
- WO-A1-2022/263367
- CN-A- 107 396 904
- CN-U- 206 760 497
- DE-B4- 102010 009 510
- JP-B2- 7 220 249
- US-A1- 2018 070 530
- US-A1- 2019 100 311
- US-A1- 2020 060 072
- US-A1- 2022 007 567

## Description

### Background

A problem in farming is the damage to crops that may be caused by pests such as whitefly and aphids. While such pests may be gotten rid of by use of chemical agents such as pesticides, specifically insecticides, there is a desire to reduce overall pesticide usage for environmental and human health reasons. Therefore, biological control agents including predatory insects and other predatory creatures such as mites may be distributed onto crops in order to reduce the number of pests.

While predatory insects and mites may be distributed by hand, this can be labour-intensive and may also lead to the predatory insects or mites being harmed or damaged during distribution. The distribution of predatory insects and mites may also be haphazard and uneven. There is therefore a need for improved biological control agent distribution systems.

While some attempts have been made to automate storage and distribution of biological control agents, it has been found that controlling an even flow of biological control agents is difficult due to the mechanical properties of the biological control agents and any carrier material, such as bran. If the mixture becomes moist it may flocculate, forming clumps. Further, due to frictional or adhesive engagement between particles, bridging may occur, where particles engage to form a structural bridge, leaving a cavity beneath the bridge that contains no biological control agents.

WO 2022/263367 A1 describes a blower head for providing a wide-angular airstream.

EP 3 965 567 B1 describes a dispenser unit for dispensing biological material.

JP 7 220249 B2 describes a dropping system for an unmanned aerial vehicle.

### Summary of the Invention

According to a first aspect of the invention, there is provided an apparatus for dispensing biological control agents, the apparatus comprising: a hopper for containing the biological control agents, the hopper comprising an orifice arranged to allow the dispensation of the biological control agents therethrough; and a valve wheel arranged outside the hopper and adjacent to the orifice, the valve wheel being arranged to rotate about a valve wheel axis to move insects away from the orifice wherein the valve wheel has a grooved outer circumferential surface; and wherein grooves of the grooved outer circumferential surface have a depth less than 5% of the radius of the valve wheel.

The valve wheel may act to distribute biological control agents evenly and without damaging the biological control agents. The distribution may therefore be more reliable and provide a greater efficacy of biocontrol.

The valve wheel axis may be parallel to a plane of the orifice. The valve wheel axis may be horizontal and a path through the orifice may be vertical. In this way, the valve wheel may rotate such that the biological control agents may be moved horizontally away from the orifice and may fall off the wheel due to gravity. This may provide a low-impact and low-acceleration distribution path for the biological control agents.

The orifice may have a width in a direction parallel to the valve wheel axis and the valve wheel may have a width along the valve wheel axis, the width of the valve wheel may be the same as or greater than the width of orifice. This may improve control of distribution of the biological control agents by preventing bypassing of the valve wheel.

The hopper may comprise a base wall or floor and the orifice may be formed in the base wall or floor. The base wall or floor may comprise an orifice plate containing the orifice. An upper surface of the base wall or orifice plate may be chamfered around the orifice. This may reduce bridging of the orifice and may reduce the prospect of the orifice becoming blocked. This may improve the evenness of the distribution of the biological control agents.

A lower surface of the base wall may have an arcuate shape adjacent the orifice, the arcuate shape extending around the valve wheel. The arcuate shape may be centred on the valve wheel axis. This may provide a constant clearance between the valve wheel and the orifice, reducing the prospect of blockage of the wheel and improving the consistency of the distribution of the biological control agents.

The base wall may have a substantially flat upper surface. This may reduce wastage of biological control agents as biological control agents and carrier material may stick to angled surfaces.

A radius of the valve wheel may be at least twice a length of the orifice, the length of the orifice being in a direction perpendicular to the valve wheel axis. The valve wheel may travel in a tangential direction parallel to the length of the orifice adjacent the orifice. A large radius of the valve wheel may reduce slippage of biological control agents and/or carrier material over the surface of the valve wheel adjacent to the orifice, so that the distribution of biological control agents can be controlled by the rotational speed of the valve wheel.

The hopper may have a substantially cylindrical inner volume. The cylindrical inner volume may be defined by a substantially vertical curved side wall. This may reduce the prospect of biological control agents and carrier material sticking to the side walls. A cylindrical inner volume may also have reduced dead zones or recirculation zones, such that a large proportion of the biological control ages in the inner volume may be dispensed.

The valve wheel has a grooved outer circumferential surface. The outer circumferential surface may have herringbone shaped grooves. The grooves may improve engagement between the biological control agents and carrier material and the valve wheel, allowing the distribution of the biological control agents to be controlled by adjusting the rotational speed of the valve wheel more closely. The grooves of the grooved outer circumferential surface have a depth less than 5% of the radius of the valve wheel. This may reduce the prospect of the biological control agents and carrier material becoming stuck in the grooves, which may lead to damage to the biological control agents and uneven distribution of the biological control agents.

The hopper may have an inner wall and an outer wall, the outer wall being spaced from the inner wall and surrounding the inner wall. There may be a cavity between the inner wall and the outer wall. This may provide thermal insulation to the hopper, which may improve the survival rate of the biological control agents as the temperature in the hopper may be better controlled.

The apparatus may further comprise an agitator arranged within the hopper, the agitator being rotatable about an agitator axis to disturb the biological control agents and, optionally, carrier material in the hopper. The agitator may act to prevent bridging of the biological control agents and carrier material and to prevent clumping of the biological control agents and carrier material or to break up clumps that have formed. The agitator may therefore provide a consistent flow of biological control agents through the orifice.

The agitator axis may be vertical. By providing a vertical agitator axis, the agitator may move parallel to a base wall of the hopper and may agitate the biological control agents and carrier material throughout the hopper better.

The agitator may comprise a plurality of bars extending radially outwardly from a central hub. The bars may have a circular cross section. By providing a circular cross-section, the bars may have no radially-extending flat surface for biological control agents and carrier material to adhere to. Further, a circular cross section may avoid stirring of the biological control agents and carrier material or sifting, which may result in a heterogenous distribution of biological control agents throughout the hopper.

The hub and/or the bars may be arranged above a or the base wall of the hopper with a clearance of any least 2mm between the hub and/or the bars and the base wall of the hopper. In this way the prospect of biological control agents being damaged by being crushed or pinched between the agitator and the base wall may be reduced.

The apparatus may further comprise an agitator drive unit, the agitator drive unit being arranged to rotate the agitator at a rotational speed of less than 60 rpm (i.e. of less than 2*π* radians per second). By providing a more slowly rotating agitator, stirring of the biological control agents and carrier material may be reduced. Stirring may cause separation of the mixture by sieving, resulting in a heterogeneous mixture of biological control agents in the hopper.

The apparatus may further comprise a curtain that at least partially surrounds the valve wheel, the curtain extending downwardly from the hopper. The curtain may surround at least 270° of the valve wheel. By providing a curtain that extends downwardly from the hopper around the valve wheel, the prospect of wind or other environmental factors interfering with dispensation of the biological control agents may be reduced. Optionally, the curtain may surround the valve wheel around 360°. This may allow improved sheltering of the valve wheel from wind. The curtain, or tubes thereof, may also act to push down leaves of plants to allow the biological control agents to be applied to deeper locations on the plants.

The hopper may have ventilation holes arranged to allow airflow between an interior volume of the hopper and an external environment. This may reduce the prospect of asphyxiation of the biological control agents and may therefore improve the survival rate of biological control agents as they are distributed.

The apparatus may further comprise a cover or lid extending over the ventilation holes, the lid being arranged to prevent objects falling into the ventilation holes. For example, the lid may prevent the prospect of rain entering the ventilation holes, which may cause clumping of the biological control agents and carrier material.

The apparatus may contain biological control agents and a carrier material in the hopper. The biological control agents may be cucumeris mites and/or the carrier material may be bran.

The apparatus may be arranged to distribute the biological control agents onto plants directly below the apparatus. This may allow more controlled distribution of the biological control agents and may improve the prospect of the biological control agents settling on the plants.

According to a second aspect of the invention, there is provided a biological control agent dispensing system comprising: a first apparatus according to the first aspect; a second apparatus according to the first or second aspect; a boom arranged to support the first and second apparatuses, the first and second apparatuses being spaced apart along the boom; and a propulsion unit arranged to propel the boom.

The propulsion unit may have a self-levelling mechanism arranged to maintain the propulsion unit, the boom and/or the dispensing systems at a consistent inclination. This may mean controlling the propulsion unit, the boom and/or the dispensing systems to be horizontal.

### Brief Description of the Drawings

Specific embodiments of the invention are now described, by way of example only, with reference to the following drawings, in which:
Figure 1 is a perspective view of an apparatus for dispensing biological control agents according to the invention;
Figure 2 shows a cross-sectional view of the apparatus of Figure 1;
Figure 3 shows a bottom view of the apparatus of Figure 1;
Figure 4 shows a cross-sectional plan view of the apparatus of Figure 1;
Figure 5 shows an agitator for use in an apparatus according to the invention;
Figure 6a shows a detail view of a portion of an apparatus according to the invention;
Figure 6b shows a detailed cross-sectional view of an orifice of an apparatus according the invention;
Figure 7 shows a detailed cross-sectional view of a joint between a lid and a hopper of an apparatus according to the invention;
Figure 8 shows an apparatus for dispensing biological control agents according to the invention; and
Figure 9 is a flowchart illustrating a method of agriculture according to the invention.

### Detailed Description

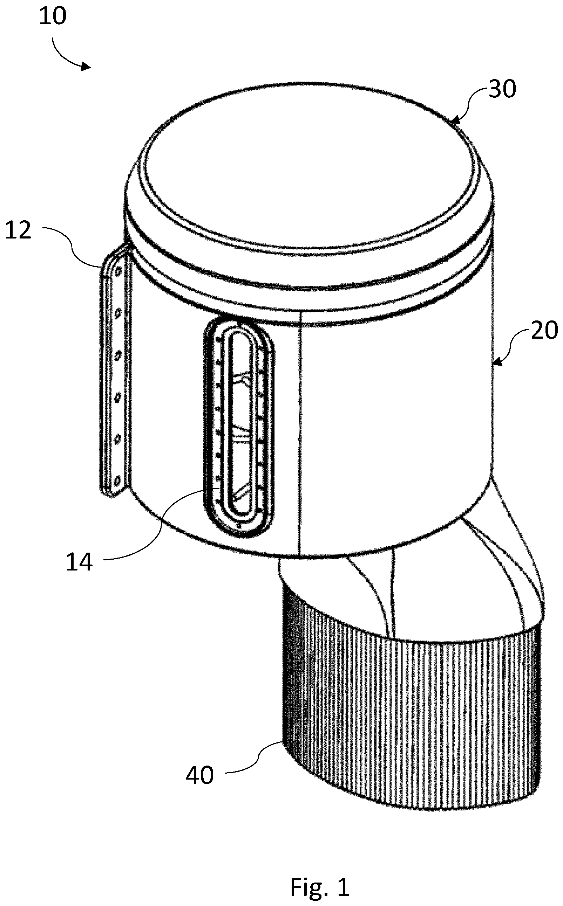

Figure 1 shows a biological control agent dispensing apparatus 10. The apparatus 10 is arranged to dispense biological control agents such as predatory insects and mites that can include the cucumeris mite. The biological control agents are generally living creatures that are known to deplete the population of pests such as by preying on the pests, competing with the pests for resources, or being parasitic to the pests.

The apparatus 10 has a hopper 20 arranged to contain biological control agents, the hopper 20 being closed by a lid or cover 30. The lid 30 may be removed from the hopper 20 to allow the hopper 20 to be filled. The hopper 20 is generally cylindrical, with a curved side wall and a flat base wall.

The biological control agents may be contained in the hopper 10 in a mixture with bran or any other carrier material. Bran may act to prevent the biological control agents from sticking together and may also provide a foodstuff for the biological control agents while they are in the hopper 20. In some cases, the biological control agents may be contained in the hopper 20 with no carrier material.

The hopper 20 has a window 14, which is a transparent or translucent portion of a sidewall of the hopper 10. The window 14 may extend vertically, from adjacent the bottom or base wall of the hopper 20 to a top or lid 30 of the hopper 20. The window 14 may allow a user to observe a level of biological control agent or biological control agent mixture in the hopper 20. Therefore, while distributing biological control agents, the amount of biological control agents in the hopper may be observed via the window. In some cases, the window 14 may be omitted and a level of biological control agent mixture in the hopper 20 may be observed by removing the lid or by an ultrasonic distance sensor, which may be arranged in the lid.

The hopper 20 also has a connection flange 12. The connection flange 12 has a flat portion extending away from the hopper and one or more holes for receiving bolts or machine screws. The connection flange 12 may be used to couple the apparatus 10 to a tractor, a boom, or an agricultural robot. Generally, the apparatus 10 may have a connector, lug or connection flange for coupling the apparatus 10 to a moveable piece of equipment. In some cases, the connection flange 12 may be omitted and the hopper 20 may be carried by a user, or the apparatus may be formed integrally with a tractor or agricultural robot. The biological control agents may be inserted into the hopper before or after the hopper is coupled to a boom.

The apparatus 10 has a curtain 40 extending downwardly from the apparatus 10. The curtain 40 may extend downwardly to substantially surround a dispensing mechanism of the apparatus 10. The curtain 40 may be formed from a plurality of individual hairs, cords or tubes 42, which are each individually flexible to allow the curtain 40 to be displaced by plants as the apparatus 10 moves over the plants. The curtain 40 may not be necessary in environments where there is little wind and where removal of the biological control agents from the plants is not a concern.

The tubes 42 of the curtain 40 may be circular in cross section and may have no sharp edges. This may reduce the chance of damage to the plants occurring due to contact with the tubes 42.

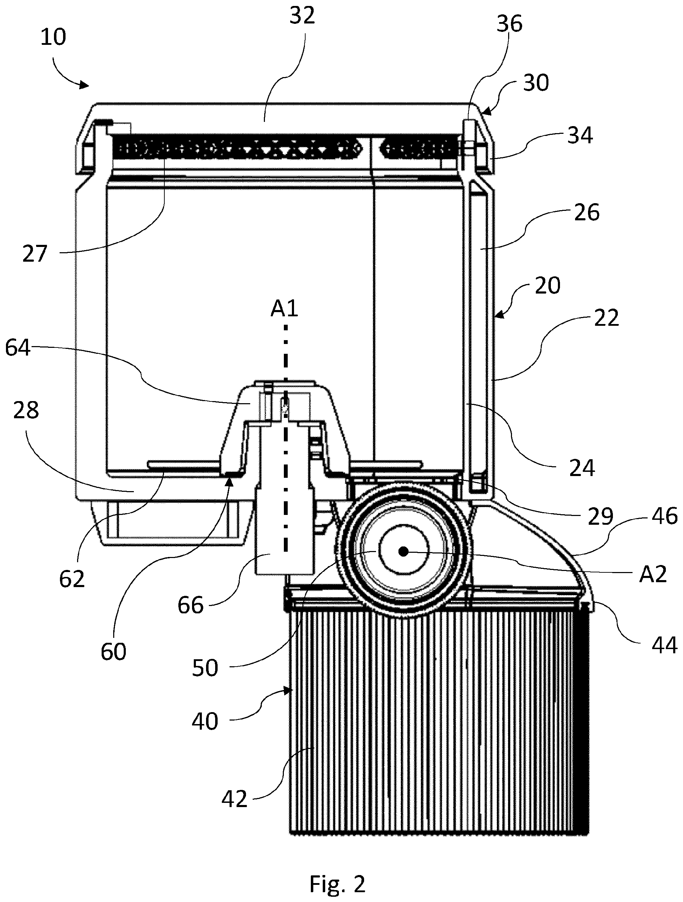

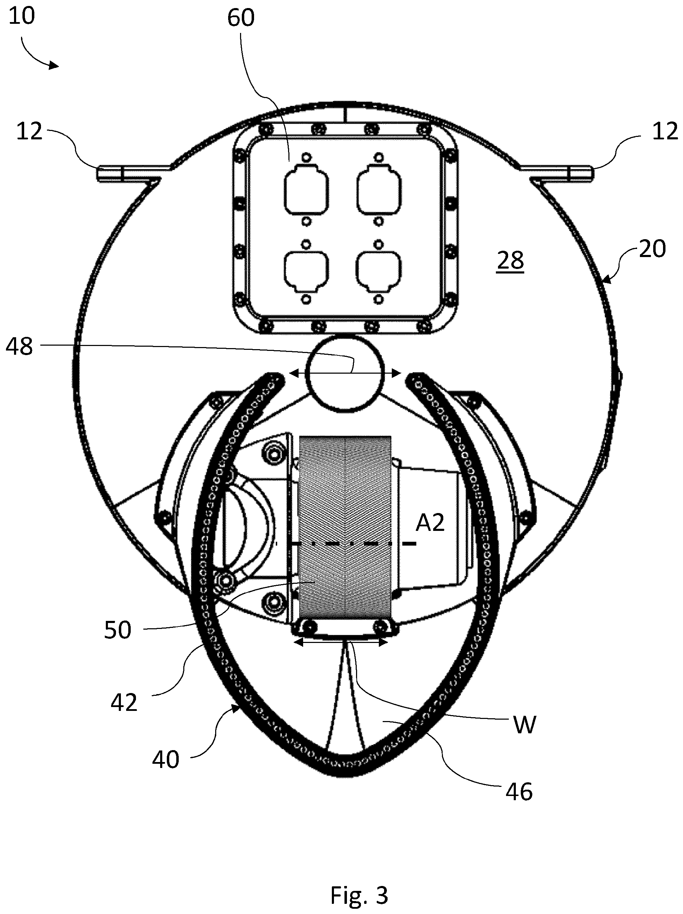

The curtain 40 may have opening (best seen in figures 2 and 3), which may be arranged behind the dispensing mechanism of the apparatus 10 as the apparatus 10 moves over the plants, so that the biological control agents are not displaced from the plant by the curtain 40 after being dispensed.

The curtain 40 is coupled to the hopper 20 via a skirt 46, which extends downwardly and radially outwardly from the hopper 10. The skirt 46 may be substantially rigid and may act to support the curtain 40 and to maintain the curtain 40 at a good distance away from a dispensation mechanism of the apparatus 10. The skirt 46 may be coupled to the curtain 40 by the tubes 42 of the skirt 14 being received in a groove 44 of the skirt 46.

Figure 2 shows the apparatus 10 in cross section. In Figure 2, it can be seen that the hopper 20 has a base wall 28 and a two-walled sidewall, the two-walled sidewall comprising an inner sidewall 24 defining an interior volume for receiving biological control agents or a mixture of biological control agents and a carrier material and an outer sidewall 22 facing the outer environment. Two-walled sidewall has a cavity 26 between the inner and outer sidewalls 22, 24. The sidewall arrangement may reduce the chance of the biological control agents overheating and perishing while in the hopper 20, increasing the effectiveness of the biological control agents after dispensation.

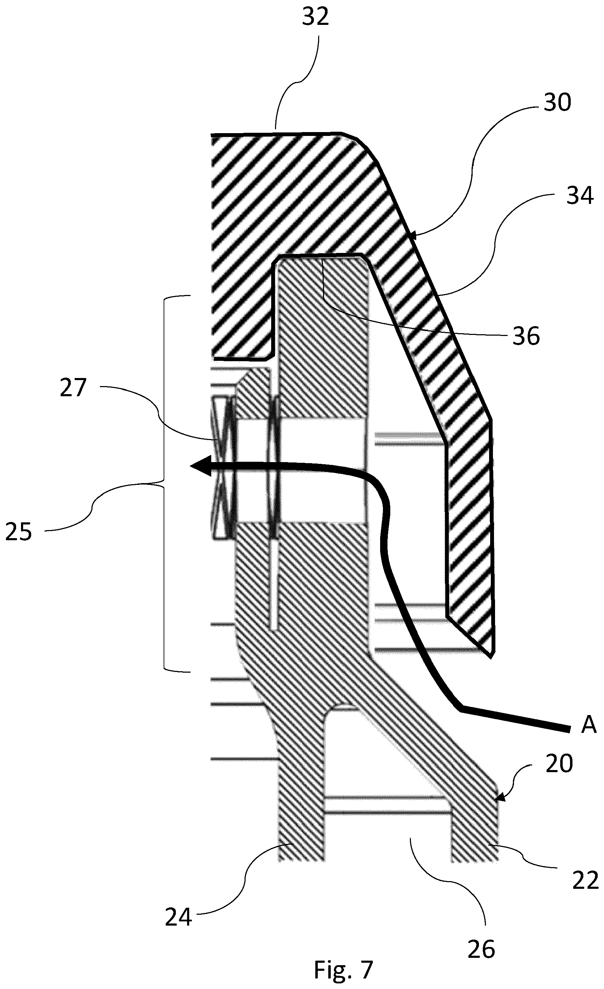

The lid 30 has an overhang 34, which extends downwardly from a lid body 32. The lid body 32 is arranged to cover an opening of the hopper 20 to prevent escape of the biological control agents and to prevent water or other foreign bodies entering the hopper 20. The hopper 20 has circumferential vents 27, which are arranged to allow airflow into the hopper 20 to avoid asphyxiation of the biological control agents. The vents 27 may be formed as holes in the sidewall 20 proximate an upper edge of the hopper 20 or in a collar of the hopper 20. The overhang 34 may extend over the vents 27 and may be spaced from the vents 27 so that airflow can enter the hopper 20 via the vents 27 and rain and other foreign bodies may be prevented from entering the hopper 20 via the vents 27. The ventilation arrangement is shown in greater detail in Figure 7.

Inside the hopper 20 there is arranged an agitator 60. The agitator 60 is driven by an agitator drive unit 66 to rotate about an agitator axis A1 in order to agitate the biological control agents and any carrier material within the hopper 20. The agitator drive unit 66 may be controlled to rotate the agitator 60 at a selectable speed. In some cases, the agitator drive unit 66 may have three different speed settings that may be selected by a user.

The agitator 60 has a central hub 64 and a plurality of bars 62 extending radially outwardly from the central hub 64. The bars 62 may have a length selected such that the bars 62 extend a distance towards the inner sidewall 24 but do not contact the inner sidewall 24. The bars 62 may be designed so that there is a clearance between the bars 62 and the inner sidewall 24 in order to avoid crushing of the biological control agents between the bars 62 and the inner sidewall 24. The bars 62 may also be arranged at a height above the base wall 28 so that the biological control agents are not crushed between the bars 62 and the base wall 28. The hub 64 may include a skirt or cover that extends downwardly to contact the base wall 28 in order to avoid the biological control agents escaping from the hopper 20 and entering the agitator drive unit 66.

Biological control agents, with any carrier material, may be dispensed from the hopper 20 via an orifice 29 arranged in the base wall 28. A valve wheel 50 is arranged under the orifice 29 and arranged to rotate about a valve wheel axis A2 to move the biological control agents and carrier material, which have fallen through the office 29, away from the orifice 29. Were the valve wheel 50 not to rotate, biological control agents and carrier material would pile up on top of the valve wheel 50, the pile extending through the office 29, such that no biological control agents would be dispensed. By rotation of the valve wheel 50, the biological control agents may be dispensed. The valve wheel 50 may be rotated at a constant rate to dispense the biological control agents at a consistent rate and allowed to fall through the orifice 29 at a consistent rate.

Figure 3 shows a bottom view of the apparatus 10. In figure 3, it can be seen that the apparatus 10 may have two connection flanges 12, extending in opposite directions from the hopper 20. It can also be seen that the curtain 40 extends partially around the valve wheel 50, having an opening 48 arranged directly behind the valve wheel 50 in a direction of travel of the apparatus 10. The opening 48 may have a width that is greater than a width W of the valve wheel 50. This may reduce the prospect of dispensed biological control agents being removed from plants after they have been dispensed.

In an alternative arrangement, the curtain 40 may extend around the valve wheel 50 entirely. The curtain 40 may surround the valve wheel 50 in a horizontal plane. Put another way, the curtain 40 may surround the valve wheel 50 around 360°.

The apparatus 10 may also have a plurality of electrical connectors 60, which may be arranged to be coupled to power and/or data lines. The connectors may receive electrical power to power the apparatus and may receive data to select rotational speeds of the agitator 60 and the valve wheel 50.

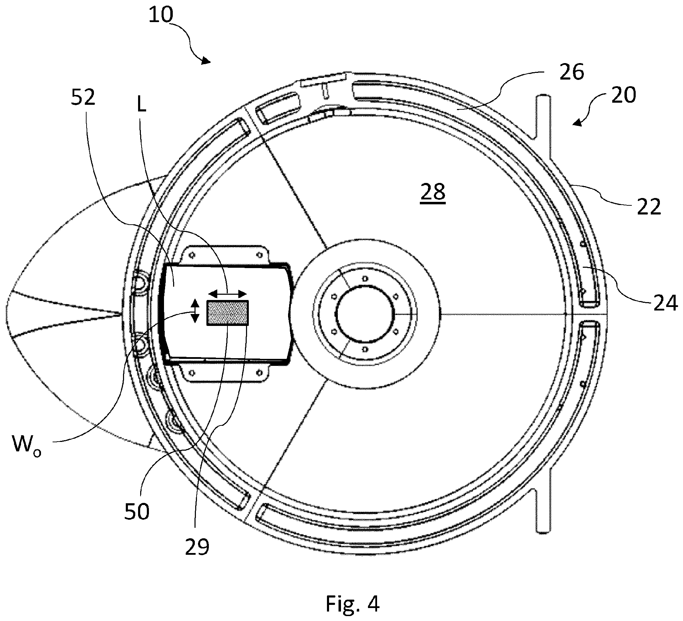

Figure 4 shows a cross-sectional plan view of the apparatus 10. In figure 4, an orifice plate 52 can be seen. The orifice plate 52 may be coupled to the base wall 28 and an upper surface of the orifice plate 52 may lie flush with an upper surface of the base wall 28. The orifice plate 52 may be releasably coupled to the base wall 28. This may allow the orifice plate to be removed and replaced, such as for maintenance purposes or to allow the size of the orifice 29 to be adjusted. The orifice 29 may have a length L and a width Wₒ. The width W_{O} of the orifice 29 may be selected to be less than the width W of the valve wheel 50. This may prevent biological control agents being dispensed by falling through the orifice 29 and bypassing the valve wheel 50, which would result in uncontrolled dispensation of the biological control agents. The length L of the orifice 29 may be selected so that the length L is smaller than the radius valve wheel 50, and may be less than half of the radius of the valve 50. This may mean that biological control agents, after falling through the orifice 29, may land on a substantially horizontal portion of the valve wheel 50 and so may not slide of the valve wheel 50. In this regard, the axis of rotation A2 of the valve wheel 50 may be arranged directly under the orifice 29 and may be centred relative to the orifice 29.

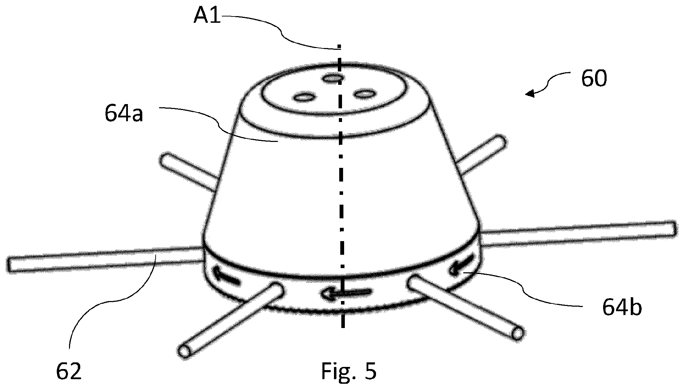

Figure 5 shows a perspective view of the agitator 60 in isolation. It can be seen agitator 60 has six rods 62 extending radially from a central hub 64. However, it will be understood that any number of rods 62 may be used.

The rods 62 have a circular cross-section such that the rods 62 are cylindrical. By providing a circular cross-section, the rods may be shaped to avoid having any substantially flat surfaces, which may be advantageous as biological control agents or any carrier substance may adhere to flat surfaces. Further, the rods 62 may have no sharp edges as sharp edges may be damaging to the biological control agents. Alternative cross-sectional shapes of the rods may also be used and the rods may not necessarily be straight, as the rods may be curved and the rods may also extend in any direction other than radially outwardly from the rods 64.

The hub 64 may have a conical portion 64a and a cylindrical portion 64b. The conical portion 64a may be designed to cover a connection between the agitator drive unit 66 and the agitator 60, while not restricting the internal volume of the hopper unduly. The cylindrical skirt 64b may be arranged to extend downwardly to seal against the base wall 29 to avoid the biological control agents escaping from the hopper 20.

The agitator 60 may be arranged to rotate about the axis of rotation A1 at a rotational speed less than 60 rpm. A lower rotational speed may reduce sifting or sieving of the biological control agents, which can allow smaller biological control agents to descend through the mixture faster than larger biological control agents and this may result in the biological control agents be distributed unevenly across an area.

In some cases, such as where larger biological control agents e.g. lady beetles may be distributed, there may be no requirement for an agitator. Alternatively, the hopper 20 may be vibrated to reduce bridging and clumping of a mixture including biological control agents.

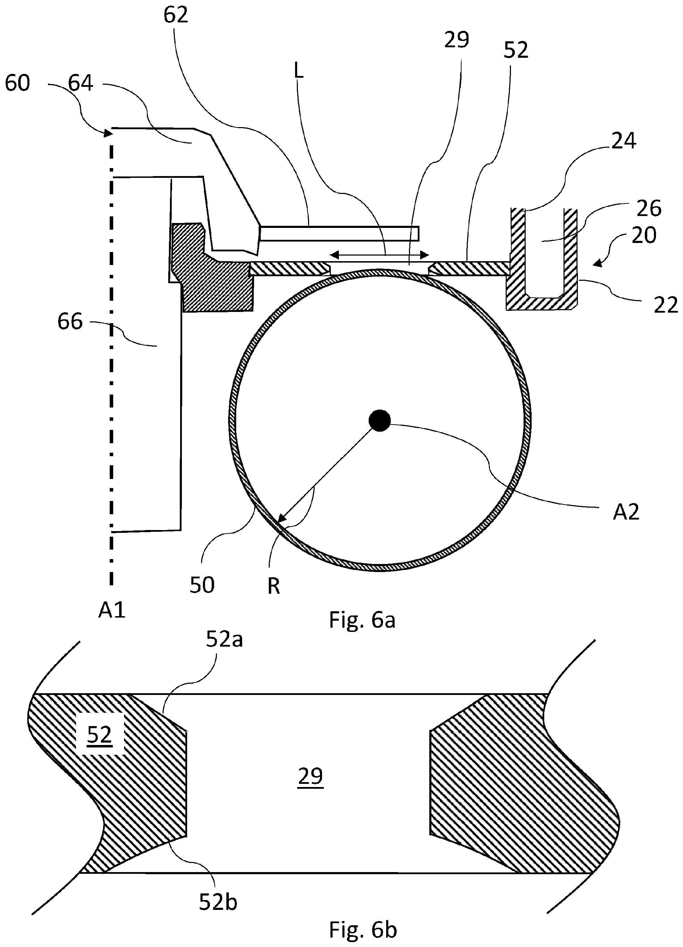

Figures 6a and 6b show detail of the dispensing mechanism of the apparatus 10. Figure 6a shows the valve wheel 50 arranged immediately below the orifice 29 such that biological control agents, after falling through the orifice 29, contact the valve wheel 50 and remain on the valve wheel 50 until the location at which they are placed on the valve wheel 50 is rotated to an orientation where the biological control agents will leave the valve wheel 50 under gravity. In this way, the apparatus may be arranged to dispense biological control agents onto a plant while being directly above the plant.

As can be seen in Figures 3 and 4, the valve wheel 50 has a grooved outer surface. The grooves may have a chevron or herringbone shape. The shaping of the grooves may be shaped such that the biological control agents are guided toward an axial centre of the valve wheel 50, to reduce the chance of the biological control agents leaving the valve wheel axially. The grooves on the outer surface of the valve wheel 50 are sized to have a depth that is less than 5% of the radius of the valve wheel 50. By providing shallower grooves, the prospect of the biological control agents or carrier material being stuck within the grooves may be reduced. The grooves may increase a fictional engagement between the outer surface of the valve 50 and the biological control agents and carrier material such that the biological control agents move with a tangential speed that is dependent on a rotational speed of the valve wheel 50.

Figure 6b shows a detailed view of the orifice plate 52 in the region of the orifice 29. The office plate 52 has a chamfer 52a on a top surface of the orifice plate 52 around the orifice 29. By providing a chamfer 52a around the orifice 29, the prospect of buildup of biological control agents and carrier material around the office 29, or clumps of biological control agents and carrier material bridging across the orifice 29 and thereby blocking the office 29 is reduced.

The orifice plate 52 also has an arcuate cutout 52b on an underside of the orifice plate 52 around the orifice 29 the arcuate cutout 52b may be formed as an arc centred on the practice of rotation A2 of the valve wheel 50. This may result in a clearance between an outer surface of the valve wheel 50 and the arcuate cutout 52b being constant. In this way, a volumetric flow rate of the biological control agents may be determined based on the rotational speed of the valve wheel 50, the clearance and the width of the orifice Wₒ.

Figure 7 shows a detail view of the connection between lid 30 and hopper 20, showing how the lid may engage the hopper 20 at an engagement surface 36. The lid 13 and hopper 20 may be sized and shaped so that the overhang portion 34 extends downwardly from the engagement surface 36 radially outside the collar 25 of the hopper 20. The overhang portion 34 may be radially spaced from the collar 25 such that airflow A may pass upwardly between the overhang portion 34 and the collar 25 and radially inwardly through the vent 27 to enter the inner volume of the hopper 20.

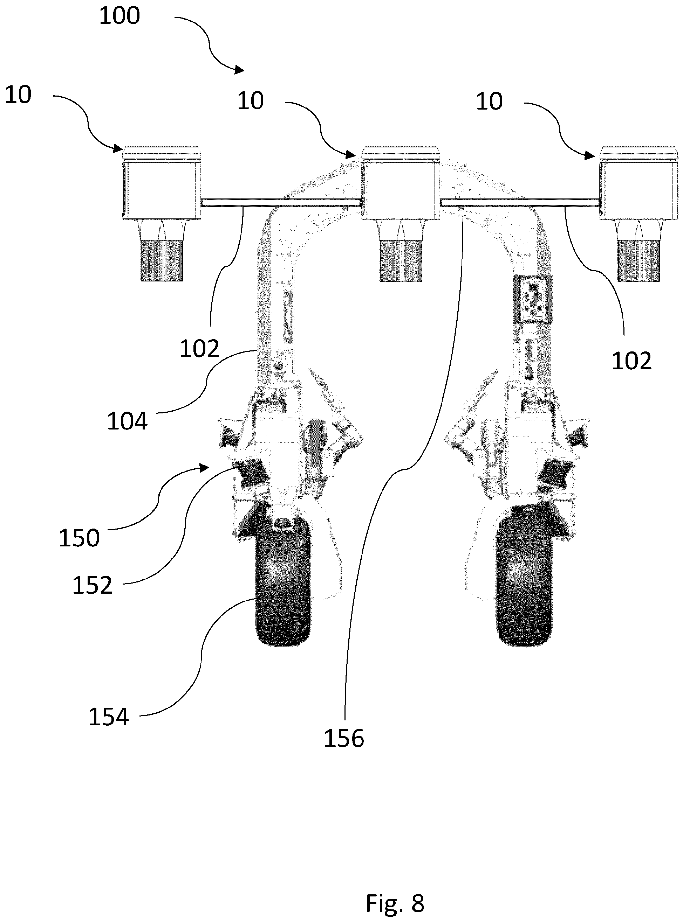

Figure 8 shows an agricultural robot 100 having a dispensing unit 10, the agricultural robot 100 having a wheeled base station 104 and a boom 102 that is arranged on the base station 104. The boom 102 has a plurality of biological control agent dispensing apparatuses 10 arranged thereon. The agricultural robot 100 may therefore travel along one or more rows of crops and the plurality of biological control agents dispensing apparatuses 10 may each dispense biological control agents onto a respective row of crops, allowing biological control agents to be dispensed onto a large number of crops more quickly.

The agricultural robot 100 may include a self-levelling system 150. The self-levelling system 150 may be arranged to maintain the agricultural robot 100 at a horizontal orientation. The self-levelling system 150 may include an actuator 152 arranged to extend and contract to alter a height of a chassis of the agricultural robot 100 above a wheel 154 of the robot 100.

The self-levelling system 150, and the actuators 152 thereof, may be controlled by distance sensors 156. The distance sensors 156 may be LIDAR or other distance sensors and may be arranged to determine a height of the agricultural robot 100, or of the dispensers 10, above a plant.

The self-levelling system, which may be combined with or incorporated into the agricultural robot 100 described above, is described in greater detail in patent application GB 2308251.

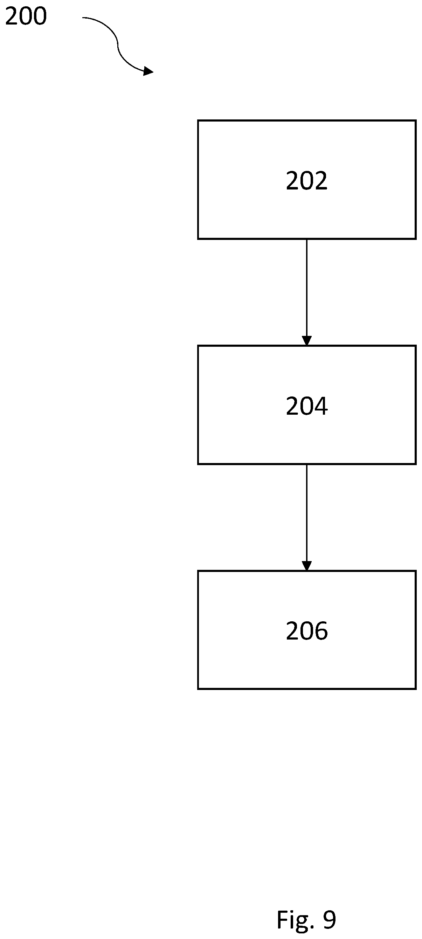

Figure 9 is a flowchart illustrating a method of agriculture 200. The method comprises, at step 202, providing a dispensing apparatus for dispensing biological control agents. The dispensing apparatus may be any apparatus or system described above with reference to figures 1 to 8.

At step 204, biological control agents may be provided and may be inserted into the dispensing apparatus. In some cases, the dispensing apparatus, and specifically the hopper thereof, may be filled with biological control agents. In some cases, the dispensing apparatus may be provided pre-filled with biological control agents.

At step 206, the biological control agents may be dispensed or distributed onto crops using the dispensing apparatus. The dispensing apparatus may be moved along a row of crops while constantly dispensing biological control agents. This may allow each plant of the crop to receive an even amount of biological control agents.

At all times from insertion of the biological control agents into the dispensing apparatus, or only while the biological control agents are dispensed, the biological control agents may be agitated. The agitation may be performed by rotation of an agitator within the hopper.

It will be understood that the above-described apparatuses are merely examples and that different features may be combined and omitted. For example, an apparatus may be constructed with no agitator. Similarly, the orifice plate, lid and features thereof are inessential for carrying out the invention.

## Claims

1. An apparatus (10) for dispensing biological control agents, the apparatus (10) comprising:
a hopper (20) for containing biological control agents, the hopper (20) comprising an orifice (29) arranged to allow the dispensation of the biological control agents therethrough; and
a valve wheel (50) arranged outside the hopper (20) and adjacent to the orifice (29), the valve wheel (50) being arranged to rotate about a valve wheel axis (A2) to move the biological control agents away from the orifice (29);
wherein the valve wheel (50) has a grooved outer circumferential surface; **characterised in that** grooves of the grooved outer circumferential surface have a depth less than 5% of the radius of the valve wheel (50).

2. The apparatus of claim 1, wherein the valve wheel axis (A2) is parallel to a plane of the orifice (29), and/or,
wherein the orifice (29) has a width (Wo) in a direction parallel to the valve wheel axis (A2) and the valve wheel (50) has a width (W) along the valve wheel axis (A2), the width (W) of the valve wheel (50) being the same as or greater than the width (Wₒ) of orifice (29).

3. The apparatus of claim 1 or 2, wherein the hopper (20) comprises a base wall (28) and wherein the orifice (29) is formed in the base wall (28).

4. The apparatus of claim 3, wherein an upper surface of the base wall (28) is chamfered around the orifice (29), and/or,
wherein a lower surface of the base wall (28) has an arcuate shape adjacent the orifice (29), the arcuate shape extending around the valve wheel (50), and/or, wherein the base wall (28) has a substantially flat upper surface.

5. The apparatus of any preceding claim, wherein a radius of the valve wheel (50) is at least twice a length (L) of the orifice (29), the length (L) of the orifice (29) being in a direction perpendicular to the valve wheel axis (A2), and/or, wherein the hopper (20) has a substantially cylindrical inner volume.

6. The apparatus of any preceding claim, wherein the hopper (20) has an inner wall and an outer wall, the outer wall being spaced from the inner wall and surrounding the inner wall.

7. The apparatus of any preceding claim, further comprising an agitator (60) arranged within the hopper (20), the agitator (60) being rotatable about an agitator axis (A1) to disturb the insects in the hopper.

8. The apparatus of claim 7, wherein the agitator axis (A1) is vertical.

9. The apparatus of claim 7 or 8, wherein the agitator (60) comprises a plurality of bars (62) extending radially outwardly from a central hub (64).

10. The apparatus of claim 9, wherein the bars (62) have a circular cross section, and/or,
wherein the hub (64) and/or the bars (62) are arranged above a or the base wall (28) of the hopper (20) with a clearance of any least 2mm between the hub (64) and/or the bars (62) and the base wall (28) of the hopper (20), and/or
wherein the apparatus (10) further comprises an agitator drive unit (66), the agitator drive uni (66) being arranged to rotate the agitator (60) at a rotational speed of less than 60 rpm.

11. The apparatus of any preceding claim, further comprising a curtain (40) that at least partially surrounds the valve wheel (50), the curtain (40) extending downwardly from the hopper (20), optionally, wherein the curtain (40) surrounds at least 270° of the valve wheel (50), further optionally 360°.

12. The apparatus of any preceding claim, wherein the hopper (20) has ventilation holes arranged to allow airflow between an interior volume of the hopper (20) and an external environment, optionally,
further comprising a cover extending over the ventilation holes, the cover being arranged to prevent objects falling into the ventilation holes.

13. A biological control agent dispensing system comprising:
a first apparatus (10) according to any preceding claim;
a second apparatus (10) according to any preceding claim;
a boom arranged to support the first and second apparatuses, the first and second apparatuses (10) being spaced apart along the boom; and
a propulsion unit arranged to propel the boom.

## Patentansprüche

1. Einrichtung (10) zum Ausgeben biologischer Bekämpfungsmittel, wobei die Einrichtung (10) Folgendes umfasst:
einen Trichter (20) zum Aufnehmen biologischer Bekämpfungsmittel, wobei der Trichter (20) eine Öffnung (29) umfasst, die angeordnet ist, um die Ausgabe der biologischen Bekämpfungsmittel durch ihn hindurch zu ermöglichen; und
ein Ventilrad (50), das außerhalb des Trichters (20) und angrenzend an die Öffnung (29) angeordnet ist, wobei das Ventilrad (50) angeordnet ist, um sich um eine Ventilradachse (A2) zu drehen, um die biologischen Bekämpfungsmittel von der Öffnung (29) weg zu bewegen;
wobei das Ventilrad (50) eine gerillte Außenumfangsfläche aufweist; **dadurch gekennzeichnet, dass** Rillen der gerillten Außenumfangsfläche eine Tiefe von weniger als 5 % des Radius des Ventilrades (50) aufweisen.

2. Einrichtung nach Anspruch 1, wobei die Ventilradachse (A2) parallel zu einer Ebene der Öffnung (29) ist, und/oder wobei die Öffnung (29) eine Breite (Wo) in einer Richtung parallel zu der Ventilradachse (A2) aufweist und das Ventilrad (50) eine Breite (W) entlang der Ventilradachse (A2) aufweist, wobei die Breite (W) des Ventilrads (50) gleich oder größer als die Breite (Wₒ) der Öffnung (29) ist.

3. Einrichtung nach Anspruch 1 oder 2, wobei der Trichter (20) eine Basiswand (28) umfasst und wobei die Öffnung (29) in der Basiswand (28) gebildet ist.

4. Einrichtung nach Anspruch 3, wobei eine obere Oberfläche der Basiswand (28) um die Öffnung (29) herum abgeschrägt ist, und/oder wobei eine untere Oberfläche der Basiswand (28) eine bogenförmige Form angrenzend an die Öffnung (29) aufweist, wobei sich die bogenförmige Form um das Ventilrad (50) herum erstreckt, und/oder wobei die Basiswand (28) eine im Wesentlichen flache obere Oberfläche aufweist.

5. Einrichtung nach einem der vorhergehenden Ansprüche, wobei ein Radius des Ventilrads (50) mindestens zweimal eine Länge (L) der Öffnung (29) ist, wobei die Länge (L) der Öffnung (29) in einer Richtung senkrecht zur Ventilradachse (A2)ist, und/oder wobei der Trichter (20) ein im Wesentlichen zylindrisches Innenvolumen aufweist.

6. Einrichtung nach einem der vorhergehenden Ansprüche, wobei der Trichter (20) eine Innenwand und eine Außenwand aufweist, wobei die Außenwand von der Innenwand beabstandet ist und die Innenwand umgibt.

7. Einrichtung nach einem der vorhergehenden Ansprüche, die ferner ein Rührwerk (60) umfasst, das innerhalb des Trichters (20) angeordnet ist, wobei das Rührwerk (60) um eine Rührwerksachse (A1) drehbar ist, um die Insekten in dem Trichter zu stören.

8. Einrichtung nach Anspruch 7, wobei die Rührwerksachse (A1) vertikal ist.

9. Einrichtung nach Anspruch 7 oder 8, wobei das Rührwerk (60) mehrere Stangen (62) umfasst, die sich von einer zentralen Nabe (64) radial nach außen erstrecken.

10. Einrichtung nach Anspruch 9, wobei die Stangen (62) einen kreisförmigen Querschnitt aufweisen, und/oder wobei die Nabe (64) und/oder die Stangen (62) über einer oder der Basiswand (28) des Trichters (20) mit einem Abstand von mindestens 2 mm zwischen der Nabe (64) und/oder den Stangen (62) und der Basiswand (28) des Trichters (20) angeordnet sind, und/oder wobei die Einrichtung (10) ferner eine Rührwerksantriebseinheit (66) umfasst, wobei die Rührwerksantriebseinheiten (66) angeordnet sind, um das Rührwerk (60) mit einer Drehzahl von weniger als 60 U/min zu drehen.

11. Einrichtung nach einem der vorhergehenden Ansprüche, ferner umfassend einen Vorhang (40), der das Ventilrad (50) zumindest teilweise umgibt, wobei sich der Vorhang (40) von dem Trichter (20) nach unten erstreckt, optional,
wobei der Vorhang (40) mindestens 270° des Ventilrades (50) umgibt, ferner optional 360°.

12. Einrichtung nach einem der vorhergehenden Ansprüche, wobei der Trichter (20) Belüftungslöcher aufweist, die angeordnet sind, um einen Luftstrom zwischen einem Innenvolumen des Trichters (20) und einer externen Umgebung zu ermöglichen, optional
ferner umfassend eine sich über die Belüftungslöcher erstreckende Abdeckung, wobei die Abdeckung angeordnet ist, um zu verhindern, dass Gegenstände in die Belüftungslöcher fallen.

13. Ausgabesystem für biologisches Bekämpfungsmittel, umfassend:
eine erste Einrichtung (10) nach einem der vorhergehenden Ansprüche;
eine zweite Einrichtung (10) nach einem der vorhergehenden Ansprüche;
einen Ausleger, der zum Tragen der ersten und zweiten Einrichtung angeordnet ist, wobei die erste und zweite Einrichtung (10) entlang des Auslegers beabstandet sind; und
eine Antriebseinheit, die zum Antreiben des Auslegers angeordnet ist.

## Revendications

1. Appareil (10) pour distribuer des agents de protection biologique, l'appareil (10) comprenant :
une trémie (20) pour contenir des agents de protection biologique, la trémie (20) comprenant un orifice (29) agencé pour permettre la distribution des agents de protection biologique à travers celui-ci ; et
un volant de manœuvre (50) agencé à l'extérieur de la trémie (20) et adjacent à l'orifice (29), le volant de manœuvre (50) étant agencé pour entrer en rotation autour d'un axe de volant de manœuvre (A2) de manière à éloigner les agents de protection biologique de l'orifice (29) ;
dans lequel le volant de manœuvre (50) a une surface circonférentielle externe rainurée ; **caractérisé en ce que** les rainures de la surface circonférentielle externe rainurée ont une profondeur de moins de 5 % du rayon du volant de manœuvre (50).

2. Appareil selon la revendication 1, dans lequel l'axe de volant de manœuvre (A2) est parallèle à un plan de l'orifice (29), et/ou, dans lequel l'orifice (29) a une largeur (Wo) dans une direction parallèle à l'axe de volant de manœuvre (A2) et le volant de manœuvre (50) a une largeur (W) le long de l'axe de volant de manœuvre (A2), la largeur (W) du volant de manœuvre (50) étant la même que ou plus grande que la largeur (Wₒ) de l'orifice (29).

3. Appareil selon la revendication 1 ou la revendication 2, dans lequel la trémie (20) comprend une paroi de base (28) et dans lequel l'orifice (29) est formé dans la paroi de base (28).

4. Appareil selon la revendication 3, dans lequel une surface supérieure de la paroi de base (28) est chanfreinée autour de l'orifice (29), et/ou, dans lequel une surface inférieure de la paroi de base (28) a un profil arqué adjacente à l'orifice (29), le profil arqué s'étendant autour du volant de manœuvre (50), et/ou, dans lequel la paroi de base (28) a une surface supérieure substantiellement plate.

5. Appareil selon l'une quelconque des revendications précédentes, dans lequel un rayon du volant de manœuvre (50) est au moins le double d'une longueur (L) de l'orifice (29), la longueur (L) de l'orifice (29) étant dans une direction perpendiculaire à l'axe de volant de manœuvre (A2), et/ou, dans lequel la trémie (20) a un volume interne substantiellement cylindrique.

6. Appareil selon l'une quelconque des revendications précédentes, dans lequel la trémie (20) a une paroi interne et une paroi externe, la paroi externe étant espacée de la paroi interne et entourant la paroi interne.

7. Appareil selon l'une quelconque des revendications précédentes, comprenant en outre un agitateur (60) agencé à l'intérieur de la trémie (20), l'agitateur (60) pouvant entrer en rotation autour d'un axe d'agitateur (A1) pour perturber les insectes dans la trémie.

8. Appareil selon la revendication 7, dans lequel l'axe d'agitateur (A1) est vertical.

9. Appareil selon la revendication 7 ou la revendication 8, dans lequel l'agitateur (60) comprend une pluralité de barres (62) s'étendant radialement vers l'extérieur à partir d'un moyeu central (64).

10. Appareil selon la revendication 9, dans lequel les barres (62) ont une section transversale circulaire, et/ou, dans lequel le moyeu (64) et/ou les barres (62) sont agencés au-dessus d'une ou de la paroi de base (28) de la trémie (20) avec un jeu d'au moins 2 mm entre le moyeu (64) et/ou les barres (62) et la paroi de base (28) de la trémie (20), et/ou dans lequel l'appareil (10) comprend en outre une unité d'entraînement d'agitateur (66), l'unité d'entraînement d'agitateur (66) étant agencée pour faire tourner l'agitateur (60) à une vitesse de rotation de moins de 60 tr/min.

11. Appareil selon l'une quelconque des revendications précédentes, comprenant en outre un rideau (40) qui entoure au moins partiellement le volant de manœuvre (50), le rideau (40) s'étendant vers le bas à partir de la trémie (20),
facultativement,
dans lequel le rideau (40) entoure au moins 270° du volant de manœuvre (50), plus facultativement 360°.

12. Appareil selon l'une quelconque des revendications précédentes, dans lequel la trémie (20) a des trous de ventilation agencés pour permettre un écoulement d'air entre un volume intérieur de la trémie (20) et un environnement externe, facultativement,
comprenant en outre un couvercle s'étendant par-dessus les trous de ventilation, le couvercle étant agencé pour empêcher des objets de tomber dans les trous de ventilation.

13. Système de distribution d'agents de protection biologique comprenant :
un premier appareil (10) selon l'une quelconque des revendications précédentes ;
un second appareil (10) selon l'une quelconque des revendications précédentes ;
une flèche agencée pour supporter les premier et second appareils, les premier et second appareils (10) étant espacés l'un de l'autre le long de la flèche ; et
une unité de propulsion agencée pour propulser la flèche.
